# EUROPEAN PATENT APPLICATION

(11) **EP 3 351 761 A1**
(43) Date of publication of application: **25.07.2018**
(21) Application number: 17152089.3
(22) Date of filing: 19.01.2017
(51) Int. Cl.: F01N 3/20, H05B 3/40, F28D 7/02

(54) **AMMONIA STORAGE TANK AND USE THEREOF**

(71) Applicant: Backer BHV AB, 28010 Sösdala (SE)
(72) Inventor: ANDERSSON, Fredrik, 72482 VÄSTERÅS (SE)
(74) Representative: Neij & Lindberg AB

(57) **Abstract**

An ammonia storage tank is configured for controlled delivery of ammonia from a solid storage material as well as reloading of ammonia into the solid storage material. The tank comprises a tube-shaped portion (2A) defining a space for containment of the solid storage material, a heating device (11) arranged onto the tube-shaped portion (2A) to surround the space, and a cooling device (12) arranged onto the tube-shaped portion (2A) to surround the space. The heating device (11) comprises an elongate heating element (11A), and the cooling device (12) comprises an elongate cooling element (12A). Each of the elements (11A, 12A) are arranged to extend around the tube-shaped portion (2A) in at least one turn. The ammonia storage tank may be used in selective catalytic reduction (SCR) of nitrogen oxide in exhaust gases from a combustion process.

## Description

### Technical Field

The present invention generally relates to techniques for controlled delivery of ammonia (NH₃) from a solid ammonia storage medium as well as reloading of ammonia into the solid ammonia storage medium, and in particular to an ammonia storage tank for such delivery and reloading. The present invention may be applied in selective catalytic reduction (SCR) of nitrogen oxide in exhaust gases from a combustion process.

### Background Art

Certain solid materials are known to be capable of reversibly storing ammonia. Such solid materials are also denoted solid ammonia storage mediums and are exemplified in US2010/0293927, US2010/0062296 and DE102009047433, and references cited therein.

Storing ammonia as a pressurized liquid in a container is hazardous if the container bursts caused by an accident or if a valve or tube breaks. In the case of solid ammonia storage, the safety issues are much less critical since a small amount of heat is typically required to release the ammonia and the equilibrium pressure at room temperature may be relatively low, depending on solid material. The advantage of storing ammonia in a solid material is attractive in many applications.

One such application is exhaust gas treatment systems for selective catalytic reduction (SCR) of nitrogen oxides (NOₓ) in oxygen-containing exhaust gases of a combustion engine or a combustion process. These systems operate to inject a well-controlled amount of a reductant (reducing agent) into the exhaust gases prior to entering an SCR catalyst capable of achieving a high conversion of NOₓ. Ammonia is commonly used as reductant in these systems, resulting in conversion of NOₓ into nitrogen and water. The use of solid ammonia storage does not only improve safety but also enables storage of ammonia at higher densities compared to the conventional use of liquid ammonia or liquid urea solutions, and may also enable the ammonia to be injected into the exhaust gases in gaseous form.

In exhaust gas treatment systems for combustion engine vehicles, it is known to hold the solid ammonia storage medium in a storage tank that is removably installed in the vehicle. When the storage tank is (essentially) depleted of ammonia, the storage tank is removed from the vehicle and replaced by a new storage tank containing solid storage medium loaded with ammonia. The depleted storage tank is then recycled and recharged (reloaded) with ammonia in a separate recharging facility or recharging unit.

Above-mentioned DE102009047433 discloses such a storage tank, which is designed for connection to an exhaust gas treatment system of a vehicle. The tank has an integrated heating device, which is operable to heat the tank and its contents for controlled release of gaseous ammonia during operation of the vehicle. The controlled release requires a uniform and well-controlled distribution of heat throughout the solid ammonia storage medium. To this end, the heating device is arranged inside the storage tank and has a relatively large surface area. This complex heating device may obstruct the flow of ammonia into the storage tank during the recharging process. To ensure proper filling of the tank and recharging of the solid storage medium, the storage tank is cooled during the recharging process so that ammonia enters the tank in liquid form. The cooling is achieved by two cooling devices which are integrated into in a recharging unit so as to be located on opposite sides of the tank when installed in the recharging unit.

Another example of such a storage tank is given in JP2014095293, which proposes a specific selection of tank materials and a combination of an internal heating device and heating elements wrapped onto the outside of the tank to achieve a uniform temperature distribution in the tank.

In the context of exhaust gas treatment, it is also known to recharge the storage tank on-board the vehicle. As an example, FR2992572 proposes to provide a vehicle with a removably installed main storage tank of large volume and a permanently installed auxiliary storage tank of smaller volume. Both tanks contain ammonia stored in solid material. The auxiliary tank is provided with an internal heater which is operated for controlled release of ammonia to be injected into the exhaust gases. The main tank has an external heater which is intermittently operated, during a recharging phase, to cause gaseous ammonia to flow into the auxiliary tank so as to recharge the solid material in the auxiliary tank with ammonia. To lower the reaction temperature and thereby expedite reloading of the auxiliary tank, a liquid coolant is circulated in cooling coils that are looped around the exterior of the auxiliary tank. A variant is disclosed in above-mentioned US2010/0062296, which proposes to eliminate the need for heating the removable main storage tank by arranging a more volatile solid material in the main tank compared to the auxiliary tank, so as to enable ammonia to passively migrate from the more volatile solid material in the main tank into the auxiliary tank during the recharging phase.

Similar needs for controlled release and recharging of ammonia may arise in exhaust gas treatment in stationary power plants, as well as for solid ammonia storage in the field of fuel cell technology.

### Brief Summary

It is an objective of the invention to at least partly overcome one or more limitations of the prior art.

Another objective is to facilitate proper release and recharging of ammonia from and to a solid material contained in a storage tank.

A further objective is to provide a storage tank for such a solid material.

One or more of these objectives, as well as further objectives that may appear from the description below, are at least partly achieved by an ammonia storage tank and a use of the ammonia storage tank according to the independent claims, embodiments thereof being defined by the dependent claims.

According to one aspect of the invention, there is provided an ammonia storage tank, or part thereof, comprising: a tube-shaped portion defining a space for containment of a solid storage material capable of reversibly storing ammonia, a heating device arranged onto the tube-shaped portion to surround said space, and a cooling device arranged onto the tube-shaped portion to surround said space, wherein the heating device comprises an elongate heating element arranged to extend around the tube-shaped portion in at least one turn, and the cooling device comprises an elongate cooling element arranged to extend around the tube-shaped portion in at least one turn.

The elongate heating and cooling elements thereby define a heating zone and a cooling zone, which both extend around the perimeter of the tube-shaped portion and thus are circumferential. By such circumferential zones, a well-controlled temperature distribution can be achieved over the cross-section of the tube-shaped portion. Further, the extent of heating and cooling zones in the axial direction of the tube-shaped portion are simply given by the axial extent of the heating and cooling elements, respectively, as looped around the tube-shaped portion. The axial extent may be increased, and the uniformity of the temperature distribution in the axial direction may be improved, by use of a larger number of turns. The use of elongate heating and cooling elements looped around the tube-shaped portion also makes it possible to set any overlap of the heating and cooling zones in the axial direction of the tube-shaped portion, which may be advantageous for achieving proper release of ammonia from and recharging of ammonia to the solid storage material.

Further, by arranging the elongate heating and cooling elements onto the tube-shaped portion, i.e. outside of the space containing the solid storage material, the heating and cooling may be implemented without obstructing the flow of ammonia into and out of the tank. Manufacture of the tank may also be facilitated by arranging the heating and cooling devices on the outside of tube-shaped portion. Further, an external arrangement of the heating and cooling devices may also extend the expected life of the ammonia storage tank, since the heating and cooling devices are not subjected to the generally corrosive environment inside the tank.

The various embodiments described in the following provide additional technical effects and advantages, including facilitating manufacture, ensuring adequate heat transfer, and ensuring sufficient heating by a low-voltage power source.

In one embodiment, the elongate heating element and the elongate cooling element are arranged to at least partly co-extend around the tube-shaped portion to define overlapping heating and cooling zones. In one implementation, the heating and cooling elements co-extend for at least one, and preferably at least 2, 3, 4 or 5 turns, around the tube-shaped portion.

In one embodiment, the elongate heating element and the elongate cooling element co-extend essentially in parallel around the tube-shaped portion.

In one embodiment, each of the elongate heating element and the elongate cooling element is arranged to extend around the tube-shaped portion in the shape of a spiral.

In one embodiment, the elongate cooling element is an elongate internal channel for propagation of a cooling medium.

In one embodiment, the elongate heating element is a resistive heating element that generates heat by passage of an electric current through a conductor.

In one embodiment, the conductor has a resistivity of 10⁻⁷ Ωm or less. Such a conductor may comprise a copper-based material.

In one embodiment, the resistive heating element is tubular.

In one embodiment, the elongate heating element comprises the conductor, a sheath centered on the conductor, and an electrical insulator of powdery material such as magnesium oxide arranged intermediate the conductor and the sheath.

In one embodiment, the ammonia storage tank further comprises a frame of thermally conductive material, wherein the frame contains the elongate heating element and the elongate cooling element and conforms to and is arranged in contact with the tube-shaped element. The frame may comprise an extruded block that defines two internal channels, wherein one internal channel is configured to comprise the elongate heating element and the other internal channel is configured to comprise the elongate cooling element, and wherein the extruded block has been deformed into the shape of a spiral.

In one embodiment, the ammonia storage tank further comprises a first end plate portion connected to or integrated with the tube-shaped portion.

In one embodiment, the ammonia storage tank further comprises said solid storage material arranged within the tube-shaped portion, and a second end plate portion connected to or integrated with the tube-shaped portion to close said space, said second end plate portion comprising at least one connector port enabling transport of ammonia out of and/or into said ammonia storage tank.

In one embodiment, the ammonia storage tank is configured for installation in an exhaust gas treatment system of a vehicle.

In an alternative embodiment, the ammonia storage tank is configured for installation in a fuel cell.

Another aspect of the invention is a method of operating the ammonia storage tank of the first aspect for release of ammonia. The method comprises: connecting the ammonia storage tank for fluid communication with a consumption unit, connecting the heating device to a controller, and operating the controller to cause the heating device to heat the ammonia storage tank and the solid storage material therein while operating the consumption unit to receive ammonia released from the solid storage material in the ammonia storage tank.

Another aspect of invention is a method of operating the ammonia storage tank of the first aspect for storage of ammonia. The method comprises: connecting the ammonia storage tank for fluid communication with a source of ammonia, connecting the cooling device to a controller, and operating the source to cause ammonia to flow into the ammonia storage tank while operating controller to cause the cooling device to cool the ammonia storage tank and the solid storage material therein.

A further aspect of the invention is use of the ammonia storage tank of the first aspect to provide ammonia for NOₓ reduction of exhaust gases from a combustion process.

A still further aspect of the invention is use of the ammonia storage tank of the first aspect to provide ammonia for a fuel cell.

Still other objectives, features, aspects and advantages of the present invention will appear from the following detailed description, from the attached claims as well as from the drawings.

### Brief Description of Drawings

Embodiments of the invention will now be described in more detail with reference to the accompanying schematic drawings.
FIG. 1A is a side view of an ammonia storage tank as installed in a consumption unit, and FIG. 1B is a side view of the ammonia storage tank as installed in a recharging unit.
FIG. 2 is a perspective view of a tubular part of an embodiment of the ammonia storage tank of FIGS 1A-1B.
FIG. 3 is an elevated side view of the embodiment in FIG. 2.
FIG. 4 is a section view taken along line A-A in FIG. 3.
FIG. 5 is an enlarged view of the encircled portion B in FIG. 4.
FIG. 6 is a side view of an ammonia storage tank as installed in an exhaust gas treatment system.

### Detailed Description of Example Embodiments

Embodiments of the present invention will now be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements. Like numbers refer to like elements throughout.

Also, it will be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more," even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments of the invention.

As used herein, "solid ammonia storage" refers to reversible storage of ammonia in a solid material, i.e. any material that is capable of binding ammonia (e.g. by absorption/adsorption) and of releasing gaseous or liquid ammonia (e.g. by desorption). Such solid ammonia storage materials include salts that bind ammonia in the form of a chemical complex, including metal-ammine salts. Solid ammonia storage materials are well-known in the art with examples being given in the publications identified in Background section. The solid material may be in the form of a solid rod/cylinder/block, powder or granulate.

Embodiments of the present invention relates to a closed storage tank or container which defines an interior space containing a solid ammonia storage material. The storage tank may have a combined inlet/outlet port for ammonia, or separate inlet and outlet ports. Each port may have a valve which is operable to selectively open and close the port. The storage tank further has integrated heating and cooling elements with connectors for releasable connection to a controller.

The storage tank is configured for removable installation in a consumption unit, in which the storage tank is operated to release ammonia from the solid ammonia storage material, and it is also configured for removable installation in a recharging unit, in which the storage tank is operated to reload ammonia into the solid ammonia storage material.

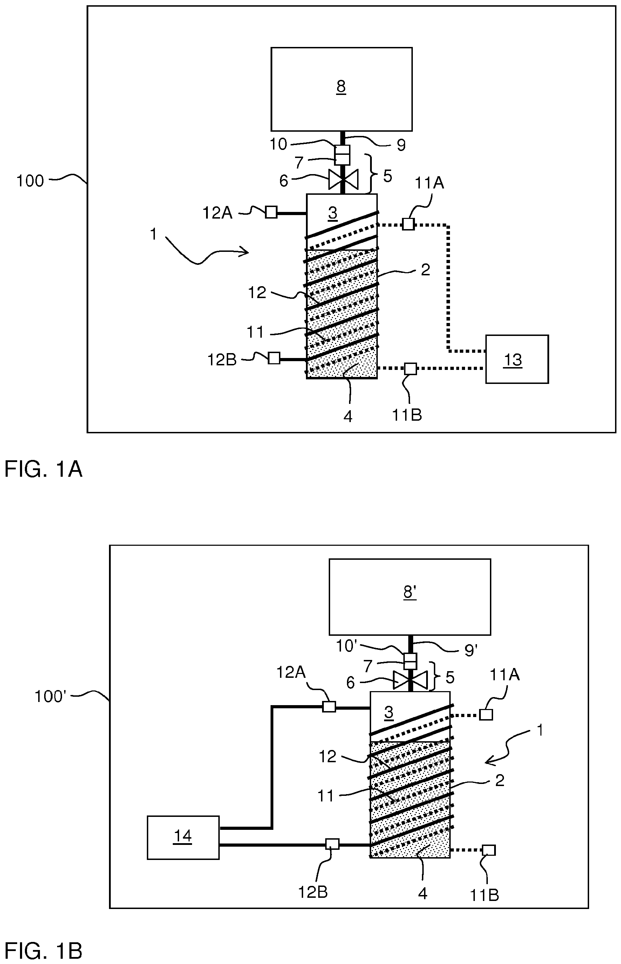

FIG. 1A shows an embodiment of the storage tank 1 as installed in a schematic consumption unit 100. The tank 1 comprises an enclosure 2 defining an interior space 3 that holds the solid storage material 4 (indicated by dotted area). The tank 1 has a single inlet/outlet port 5, which comprises an on/off valve 6 and a connector 7. The consumption unit 100 is configured to operate a process that consumes or otherwise uses liquid or gaseous ammonia. In FIG. 1A, this process is represented by a generic block 8, which is connected in fluid communication with the tank 1 by a fluid line 9 and a connector 10. The tank 1 further comprises an elongated heating element 11 (indicated by dashed lines) which is arranged in loops or turns around and in contact with the external surface of the enclosure 2, and an elongated cooling element 12 which is likewise arranged in loops or turns around and in contact with the external surface of the enclosure 2. Connectors 11A, 11B, 12A, 12B are arranged on terminal ends of the heating element 11 and the cooling element 12, respectively. A controller 13 in the consumption unit 100 is connected to the connectors 11A, 11B and is configured to selectively heat the solid storage material 4 by means of the heating element 11. In one embodiment, the heating element 11 is an electrical heater and the controller 13 comprises a power source and is operable to supply a voltage that causes an electrical current to flow through the heating element such that heat is generated by resistive losses in the heating element 11. In another embodiment, the heating element 11 is a fluid channel and the controller 13 is operable to supply a heating fluid that emits heat when flowing through the fluid channel. It is to be understood that the controller 13 may also be connected to components of block 8 to ensure proper dosing of the ammonia from the tank 1.

By arranging the heating and cooling elements 11, 12 on the outside of the enclosure 2, it is ensured that the elements 11, 12 do not obstruct the flow of ammonia. Further, the external arrangement ensures that the elements 11, 12 are not exposed to the solid storage material, which is often corrosive, which thus extends the life of the storage tank 1. In the illustrated example, the elements 11, 12 are arranged to co-extend around the enclosure 2, i.e. they are looped as a pair around the enclosure 2. This ensures that essentially the same surface area of the enclosure 2, and thus the same part of the space 3, can be both heated and cooled in a controlled manner. In an alternative embodiment, the elements are spatially separated on the enclosure 2, so as to define heating and cooling zones on different parts of the enclosure 2. In a further variant, the elements 11, 12 are arranged to define partially overlapping heating and cooling zones, by arranging the elements 11, 12 to partly co-extend. It is generally advantageous for the respective element 11, 12 to define a plurality of turns around enclosure 2, e.g. in at least 2, 3, 4 or 5 turns, e.g. as shown in FIGS 1A-1B, to ensure a spatially uniform heating and cooling, respectively. However, in certain embodiments, at least one of the elements 11, 12 may be arranged in a single turn around the enclosure 2.

The installation of the tank 1 in the consumption unit 100 is made by an operator that interconnects the connectors 7, 10 and connects the heating element 11 to the controller 13. The valve 6 may be opened manually by the operator, or electrically by the controller 13. The controller 13 may implement either open-loop or closed-loop control to heat the solid storage material. The closed-loop control may be based on a measured control parameter, e.g. a directly or indirectly measured temperature or pressure in the tank 1. When the tank 1 is deemed to be depleted of ammonia, e.g. detected by a sensor or estimated based on the consumption of ammonia, the operator is instructed to disconnect the depleted tank 1 and install a new ammonia-containing tank 1. If the heating element 11 is a fluid channel, the controller 13 may be configured to purge the heating element 11 of heating fluid before the disconnection, e.g. by blowing a gas through the heating element 11.

FIG. 1B shows the storage tank 1 of FIG. 1A as installed in a recharging unit 100'. The recharging unit 100' comprises a source 8' of liquid or gaseous ammonia which is operable for controlled delivery of ammonia to the storage tank 1. The source 8' is connected in fluid communication with the tank 1 by a fluid line 9' and a connector 10'. A controller 14 in the recharging unit 100' is connected to the connectors 12A, 12B and is configured to selectively cool the solid storage material 4 by means of the cooling element 12. In one embodiment, the cooling element 12 is a fluid channel and the controller 14 is operable to supply a cooling fluid. Any cooling fluid may be used, including water and water-based solutions. It is to be understood that the controller 14 may also be connected to components of the source 8' to ensure proper dosing of ammonia to the tank 1.

The installation of the tank 1 in the recharging unit 100' is made by an operator that interconnects the connectors 7, 10' and connects the cooling element 12 to the controller 14, which may implement either open-loop or closed-loop control to cool the solid storage material. When the tank 1 is deemed to be sufficiently loaded with ammonia, e.g. detected by a sensor or estimated based on the supplied amount of ammonia, the operator is instructed to disconnect the tank 1. The controller 14 may be configured to purge the cooling element 12 of cooling fluid before the disconnection, e.g. by blowing a gas through the cooling element 12.

Although not shown in FIGS 1A and 1B, it is conceivable that also the cooling element 12 is connected and operated to cool the solid storage material 4 in the consumption unit 100 and/or that also the heating element 11 is connected and operated to heat the solid storage material 4 in the recharging unit 100'.

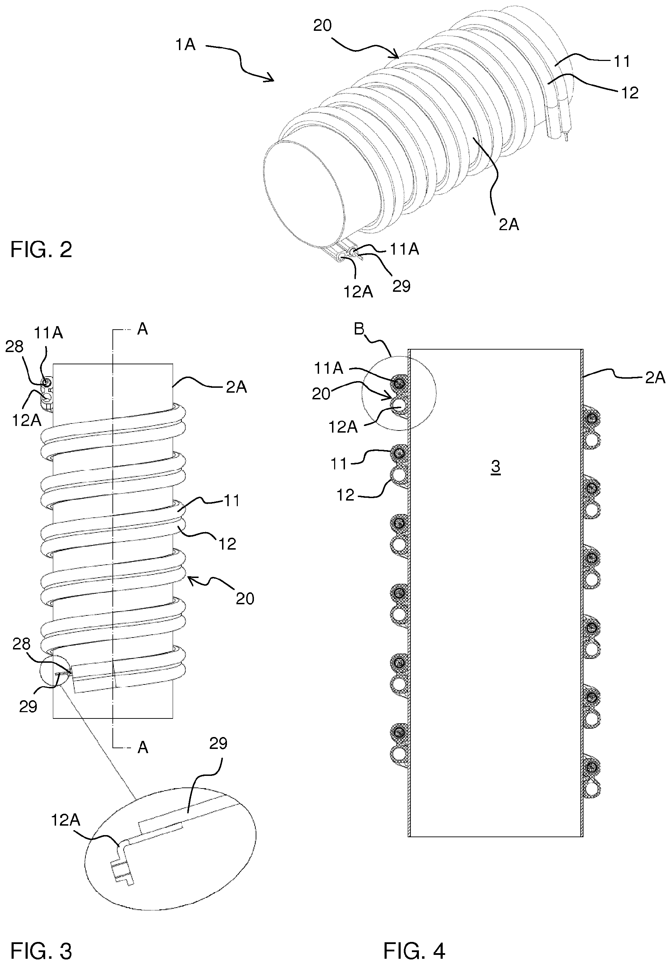

In the following, a specific embodiment will be described with reference to FIGS 2-5. This embodiment involves a part 1A of the storage tank 1. This part 1A is an intermediate product that comprises a tube-shaped or cylindrical enclosure element 2A ("tube"), which forms part of the enclosure 2 (FIGS 1A-1B), as well as the heating and cooling elements 11, 12. The part 1A may be separately manufactured and shipped to a production plant for storage tanks, in which a first end plate (not shown) forming the bottom of the enclosure 2 is attached to one open end of the tube 2A, whereupon the solid storage material is arranged inside the tube 2A and a second end plate (not shown) forming the top of the enclosure 2 is attached to the other open end of the tube 2A. In a variant, the part 1A is provided with the first end plate before shipping to the production plant. The enclosure 2 is typically made of metal, such as stainless steel, and the end plates may be attached to the tube 2A by any suitable fastening technique, such as welding, brazing, screw fittings, bayonet fittings, gluing, etc, or a combination thereof. The tube 2A may have any cross-section, including circular (as shown), oval, rectangular, etc. A curved cross-section may be preferable to facilitate establishment of close thermal contact between the elements 11, 12 and the enclosure 2.

In the embodiment of FIGS 2-5, the heating and cooling elements 11, 12 are configured as elongate tubular elements that are arranged to co-extend in more than five turns around the tube 2A and thereby define overlapping heating and cooling zones that span a major part of the axial extent of the tube 2A. The heating element 11 comprises a resistive heater 11A, and the cooling element 12 defines a channel 12A for a cooling fluid. It should be noted that there are many design parameters that may be adapted to a particular application, e.g. based on the required heating, the required cooling, the temperature and flow rate of the cooling fluid, and the available voltage for driving the heating element 11. Such design parameters include the number of turns of the respective element 11, 12, the dimension of the channel 12A, the component materials of the resistive heater 11A (see below), and the dimension of the internal structure of the resistive heater 11A. Typically, the supplied power to the resistive heater 11A is in the range of 50-1000 W.

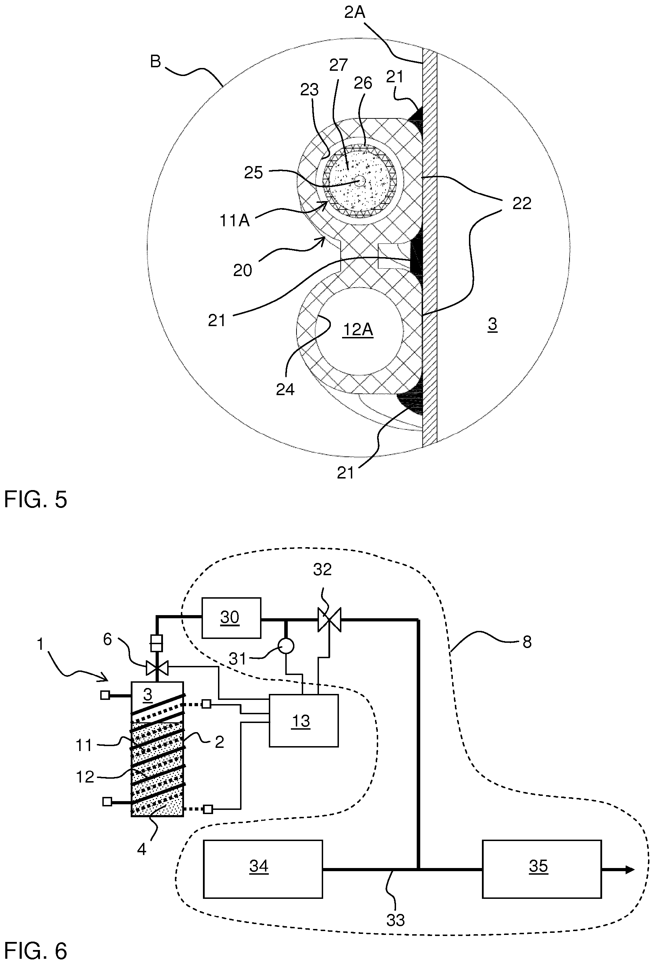

In the embodiment of FIGS 2-5, the heating and cooling elements 11, 12 are integrated into a frame or support 20 which is slid onto the tube 2A and fastened thereon by any suitable technique, such as brazing, welding or gluing. In the enlarged view of FIG. 5, black portions designate fastening material 21. The frame 20 has an inner profile or shape that conforms to the outer shape of the tube 2A, such that the frame 20 fits snugly onto the tube 2A. As seen in the enlarged view of FIG. 5, the surface portions 22 of the frame 20 that face towards the axial symmetry axis of the frame 20 are essentially flat in the axial direction so as to abut on the outer surface of the tube 2A. The frame is preferably made of a material with high thermal conductivity, such as aluminum, steel, copper, etc, or any alloy thereof.

The provision of the frame 20 facilitates mounting of the elements 11, 12 with good thermal contact to the tube 2A. It also makes it possible to manufacture the frame 20 with integrated heating and cooling elements 11, 12 by a specialized process separate from the process of mounting the frame 20 onto the tube 2A.

In the illustrated embodiment, the frame 20 is made from an extruded component which defines two elongate, parallel channels 23, 24. The extruded component is then deformed into the shape of a spiral to form the frame 20. One channel 23 defines a compartment for the resistive heater 11A, which is arranged in this channel before or after the deformation. The other channel 24 forms the cooling channel 12A.

In the example of FIG. 5, the resistive heater 11A is a tubular heater element that comprises an electrically conductive wire (conductor) 25 at its axial center and a tubular sheath 26 which is coaxially arranged around the conductor 25 to define a spacing for an electrical insulator 27. The conductor 25 is made of a material causing resistive losses and thereby generating heat. The insulator 27 centers the conductor 25 inside the sheath 26 and generally prevents shorting of the conductor 25 with the sheath 26. The sheath 26 may or may not be grounded in use. As indicated in FIG. 3, a seal 28 is arranged at the respective end of the sheath 26 to enclose the electrical insulator 27 in the spacing and to prevent ingress of moisture into the electrical insulator 27. The terminal ends of resistive heater 11A are formed by so-called cold pins 29, which are used to electrically connect the resistive heater 11A to the power source (cf. controller 13 in FIG. 1A). The pin 29 is termed "cold" because it does not generate heat like the conductor 25. The cold pins 29 are electrically connected to the conductor 25 and may extend through the respective seal 28. As indicated in the enlarged view at the bottom end of FIG. 3, a respective connector terminal 12A may be attached to the cold pins 29 to facilitate electrical connection between the power source and the resistive heater 11A. Similarly, a respective nipple or the like (not shown) may be attached to the respective terminal end of the cooling channel 12A to facilitate fluid connection between a cooling fluid source (cf. controller 14 in Fig. 1B) and the cooling channel 12A.

The material of the conductor 25 may be selected based on the type of power source and the need for heating. Configurations of conductive wires for heating are well-known to those skilled in the art. For example, if the power source provides a voltage of 110 V or 230 V or even higher, the conductor 25 may be made of a conventional resistive wire material, including but not limited to Nichrome, Kanthal, Constantan, Evanohm, Balco, etc. However, in low voltage applications, e.g. in vehicles with a power source of 12V or 24V, it may be advantageous to use a low resistivity material in the conductor 25, such as copper, aluminum, nickel, steel etc, or any alloy thereof, to ensure sufficient heat generation. As used herein, a low resistivity material has a resistivity of about 10⁻⁷ Ωm at 20°C, or less. In a currently preferred embodiment, the conductor 25 is a spiral wound wire. The sheath 26 may be made of any malleable, heat conductive and thermally stable material. Appropriate materials are well known to those skilled in the art of heater tube design, e.g. carbon steel, high or low alloy steels, copper and alloys thereof. In a currently preferred embodiment, the sheath 26 is a so-called "bundy tube" of stainless steel. The insulator 27 may be made of any noncorrosive, high dielectric, heat conductive and thermally stable material. The insulator 27 may be in the form of a powder which is compacted into a chalklike consistency that serves to center the conductor 25. Example materials for the insulator 27 include crushed fireclay, magnesium silicate, and ground mica. In a currently preferred embodiment, the insulator 27 is made of or comprises magnesium oxide, MgO, which is known to be a good electrical insulator with adequate heat conductivity. The seals 28 are made of an electrically insulating material capable of withstanding elevated temperatures, e.g. baked enamel, ceramic, porcelain, glass and high temperature polymers. Materials for the cold pins 29 may comprise steel, copper or aluminum. In one currently preferred embodiment, the cold pins 29 are made of nickel plated steel.

Embodiments of the storage tank 1 as described herein are useful in the controlled delivery of ammonia to an exhaust gas containing NOₓ for the purpose of reducing NOₓ by the well-known selective catalytic reduction (SCR) process. An example is given in FIG. 6, in which the storage tank 1 is installed in a vehicle and connected to a system for treatment of exhaust gas from a combustion process in the vehicle. The description given for FIGS 1A-1B is applicable to the installation in FIG. 6, and the exhaust gas treatment corresponds to the consumption process 8 of FIG. 1A, as indicated by a dashed line in FIG. 6. Like in FIG. 1A, the heating element 11 of the tank 1 is connected to a controller 13, which controls the ammonia release and dosing. The controller 13 may or may not be part of an engine control unit (ECU). When the tank 1 is heated and the on/off valve 6 is opened, ammonia is released into an optional buffer tank 30 and the pressure of ammonia is detected by a pressure sensor 31. Ammonia is dosed by means of a dosing valve 32 into an exhaust line 33 coming from an engine or combustion process 34 and then the mixed gas enters a selective catalytic reduction catalyst 35 where NOₓ and ammonia is converted to harmless species. The controller 13 activates the dosing valve 32 according to demands defined by the engine operation. In this specific example, the controller 13 controls the supply of power to the heating element 11 of the tank 1 based on the pressure of ammonia detected by the sensor 31, to ensure that the pressure of ammonia at least exceeds the pressure in the exhaust line 33. Although not shown in FIG. 6, the tank 1 may be disconnected from the vehicle and reloaded in a recharging unit (cf. 100' in FIG. 1B).

Embodiments of the storage tank 1 are useful for both mobile and stationary SCR-applications but are considered particularly useful in the delivery of ammonia for automobiles, trucks, buses, ships and trains fuelled on diesel or using lean-burn gasoline or even for ammonia or hydrogen-fuelled engines. Embodiments of the storage tank 1 are also useful for delivery of ammonia to solid oxide fuel cells (SOFC), which can operate on a number of fuels, e.g. hydrogen, methane but also directly on gaseous ammonia. Embodiments of the storage tank 1 are also useful for the delivery of ammonia to an integrated ammonia decomposition unit for the production of hydrogen, which subsequently may be used as fuel in a PEM (Proton Exchange Membrane) Fuel Cell, an alkaline fuel cell or a molten carbonate fuel cell.

It may be noted that there are many alternatives to the embodiments presented hereinabove. In one example, at least one of the heating and cooling elements is pliable/malleable and wound in direct contact with the enclosure. In another example, at least one of the heating and cooling elements is integrated into the wall of the enclosure. Further, the resistive heater 11A may be non-tubular, e.g. a resistive foil. In another alternative, the heating element 11 may be a channel for a heating fluid, e.g. a fluid heated by heat generated by the combustion process.

## Claims

1. An ammonia storage tank, or part thereof, comprising:
a tube-shaped portion (2A) defining a space (3) for containment of a solid storage material (4) capable of reversibly storing ammonia,
a heating device (11) arranged onto the tube-shaped portion (2A) to surround said space (3), and
a cooling device (12) arranged onto the tube-shaped portion (2A) to surround said space (3),
wherein the heating device (11) comprises an elongate heating element (11A) arranged to extend around the tube-shaped portion (2A) in at least one turn, and
wherein the cooling device (12) comprises an elongate cooling element (12A) arranged to extend around the tube-shaped portion (2A) in at least one turn.

2. The ammonia storage tank of claim 1, wherein the elongate heating element (11A) and the elongate cooling element (12A) are arranged to at least partly co-extend around the tube-shaped portion (2A) to define overlapping heating and cooling zones.

3. The ammonia storage tank of claim 1 or 2, wherein the elongate heating element (11A) and the elongate cooling element (12A) co-extend essentially in parallel around the tube-shaped portion (2A).

4. The ammonia storage tank of any preceding claim, wherein each of the elongate heating element (11A) and the elongate cooling element (12A) is arranged to extend around the tube-shaped portion (2A) in the shape of a spiral.

5. The ammonia storage tank of any preceding claim, wherein the elongate cooling element (12A) is an elongate internal channel (24) for propagation of a cooling medium.

6. The ammonia storage tank of any preceding claim, wherein the elongate heating element (11A) is a resistive heating element that generates heat by passage of an electric current through a conductor (25).

7. The ammonia storage tank of claim 6, wherein the conductor (25) has a resistivity of 10⁻⁷ Ωm or less.

8. The ammonia storage tank of claim 6 or 7, wherein the resistive heating element (11A) is tubular.

9. The ammonia storage tank of any one of claims 6-8, wherein the elongate heating element (11A) comprises the conductor (25), a sheath (26) centered on the conductor (25), and an electrical insulator (27) of powdery material such as magnesium oxide arranged intermediate the conductor (25) and the sheath (26).

10. The ammonia storage tank of any preceding claim, further comprising a frame (20) of thermally conductive material, wherein the frame (20) contains the elongate heating element (11A) and the elongate cooling element (12A) and conforms to and is arranged in contact with the tube-shaped element (2A).

11. The ammonia storage tank of claim 10, wherein the frame (20) comprises an extruded block that defines two internal channels (23, 24), wherein one internal channel (23) is configured to comprise the elongate heating element (11A) and the other internal channel (24) is configured to comprise the elongate cooling element (12A), and wherein the extruded block has been deformed into the shape of a spiral.

12. The ammonia storage tank of any preceding claim, further comprising a first end plate portion connected to or integrated with the tube-shaped portion (2A).

13. The ammonia storage tank of claim 12, further comprising said solid storage material (4) arranged within the tube-shaped portion (2A), and a second end plate portion connected to or integrated with the tube-shaped portion (2A) to close said space (3), said second end plate portion comprising at least one connector port (5) enabling transport of ammonia out of and/or into said ammonia storage tank.

14. The ammonia storage tank of any preceding claim, which is configured for installation in an exhaust gas treatment system of a vehicle.

15. Use of the ammonia storage tank of any preceding claim to provide ammonia for NOₓ reduction of exhaust gases from a combustion process.
